(19) Europäisches Patentamt / European Patent Office / Office européen des brevets

(11) **EP 2 658 929 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(21) Anmeldenummer: **11802456.1**

(22) Anmeldetag: **30.12.2011**

(51) Int Cl.:
*C09C 1/22* (2006.01)   *C09C 1/24* (2006.01)
*C09C 1/34* (2006.01)   *C09C 1/36* (2006.01)

(86) Internationale Anmeldenummer:
**PCT/EP2011/074309**

(87) Internationale Veröffentlichungsnummer:
**WO 2012/089835 (05.07.2012 Gazette 2012/27)**

(54) **ÖL- UND WACHSHALTIGE MITTEL IN STÜCKIGER FORM FÜR DIE ASPHALT- UND BITUMENEINFÄRBUNG**

OIL- AND WAX-CONTAINING COMPOSITIONS IN PIECE FORM FOR THE COLORING OF ASPHALT AND BITUMEN

AGENTS HUILEUX ET CIREUX EN MORCEAUX DESTINÉS À COLORER DE L'ASPHALTE ET DU BITUME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2010 EP 10197401**

(43) Veröffentlichungstag der Anmeldung:
**06.11.2013 Patentblatt 2013/45**

(73) Patentinhaber: **LANXESS Deutschland GmbH 50569 Köln (DE)**

(72) Erfinder:
• **CHLOPEK, Krzysztof**
  **47800 Krefeld (DE)**
• **KISCHKEWITZ, Jürgen**
  **40883 Ratingen (DE)**
• **KOHNERT, Lutz**
  **47228 Duisburg (DE)**
• **INDEN, Holger**
  **42113 Wuppertal (DE)**

(56) Entgegenhaltungen:
**EP-A1- 0 567 882    EP-A1- 1 215 249**

## Beschreibung

Die vorliegende Erfindung betrifft Mittel enthaltend mindestens ein anorganisches Pigment, ein oder mehrere Öle und ein oder mehrere Wachse, sowie Verfahren zu deren Herstellung und ihre Verwendung zum Einfärben von Baustoffen, vorzugsweise Asphalt, Bitumen, bituminösen Mischungen, Teer und teerhaltigen Zusammensetzungen, sowie ein Verfahren zum Einfärben von Baustoffen und die mit den Mitteln eingefärbten Baustoffe.

## Anwendungsgebiet

Die Verarbeitung von Pigmenten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben an Verpackungen, Maschinenteilen und Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen, wie zum Beispiel Eisenoxidpigmenten, ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht.

Grundsätzlich werden von Pigmentgranulaten, unabhängig davon, aus welchem Herstellungsverfahren sie stammen, vom Markt zwei sich in der Richtung gegensätzliche Eigenschaften gefordert: mechanische Stabilität (Abriebsstabilität) des Granulats und gute Dispergiereigenschaften im eingesetzten Medium. Die mechanische Stabilität ist verantwortlich für gute Transporteigenschaften sowohl beim Transport zwischen Hersteller und Anwender als auch für gute Dosierung und Fließeigenschaften beim Einsatz der Pigmente. Sie wird durch hohe Haftkräfte bewirkt und hängt zum Beispiel von Bindemittelmenge und -art ab. Andererseits wird die Dispergierbarkeit durch eine gute Mahlung vor der Granulierung (Nass- und Trockenmahlung), durch die mechanische Energie bei der Einarbeitung in das jeweilige Anwendungsmedium (Scherkräfte) und durch Dispergierhilfsmittel, die die Haftkräfte im Granulat bei der Einarbeitung in ein Medium sofort herabsetzen, beeinflusst. Zur Erzielung des optimalen Farbeindrucks ist ein Zerteilen der Pigmentgranulate zu Primärteilchen erforderlich. Bei anorganischen Pigmenten ist die Anwendung von größeren Mengen Dispergierhilfsmittel wegen des Kostenverhältnisses Hilfsmittel/Pigment eingeschränkt.

Zum Einfärben von Baustoffen, wie beispielsweise Asphalt, werden die Pigmente teilweise noch in pulverförmigem Zustand eingesetzt. Sie haben in gemahlener Form den Vorteil der guten Dispergierbarkeit. Die vollständige und homogene Verteilung solcher pulverförmigen anorganischen Pigmente erfolgt im Asphaltmischer in einer kurzen Zeit - in der Regel innerhalb einer Minute. Der Nachteil dieser feinen Pulver besteht darin, dass sie kein gutes Fließverhalten aufweisen und sich beim unsachgemäßen Lagern häufig zusammenballen und verklumpen können. Sie kleben an Verpackungen und Maschinenteilen, wodurch die genaue Dosierung bei der Verarbeitung erschwert wird. Ein weiterer Nachteil der Pulver besteht darin, dass sie zum Stauben neigen.

## Stand der Technik

Die Staubvermeidung und verbesserte Dosierung bei der Anwendung von Pigmenten zur Einfärbung von organischen Medien, besonders von Asphalt, ist ein vorrangiges Ziel, weil die Asphaltmischanlagen sehr oft in Wohnbezirken lokalisiert sind.

Gemäß der Lehre von US 3,778,288 können Granulate als "Master Batches" unter Zugabe von Wachsen in einem Aufbaugranulationsverfahren über einen beheizbaren Mischer hergestellt werden. Dabei werden je nach Reaktionsbedingungen unterschiedliche Korngrößen erzielt. Das Anwendungsgebiet dieser Granulate liegt in der Färbung von Polymeren wie Kunststoffen, Wachsen oder Harzen. Die optimalen Korngrößen der Granulate liegen für solche Anwendungen zwischen 0,2 und 2 mm (70 bis 10 mesh). Dabei werden die als Bindemittel eingesetzten Wachse bevorzugt in Konzentrationen von 26% bis 65 Gew.% bezogen auf die eingesetzte Pigmentmenge verwendet. Dieser hohe Bindemittelanteil ist für die Anwendung der Färbung von Baustoffen nachteilig, da das Bindemittel einen negativen Effekt auf die Eigenschaften der Baustoffe ausüben kann. Zudem sind deutlich höhere Mengen an "Master Batch" im Vergleich zum anorganischen Pigment notwendig, um die gleiche Färbewirkung zu erzielen, wobei die Anwendung damit unwirtschaftlich wird.

In EP 0 567 882 A1 wurde ein Verfahren zur Einfärbung von Asphalt und/oder Bitumen mit anorganischen Pigmentgranulaten beschrieben, in dem die Granulate unter Zusatz von Ölen und/oder Wachsen entstehen können. Mit der angegebenen Menge von Additiven (0,01-bis 10 Gew.% in Bezug auf Pigment) kann man zwar die Dispergierbarkeit der Granulate in Bitumen verbessern, allerdings können mit diesem Verfahren keine Granulate mit ausreichender mechanischen Stabilität hergestellt werden.

EP 1 598 395 A1 beschreibt eine Zusammensetzung auf Basis von Copolymeren von Ethyl-Vinyl-Acetat für Asphalt. Hierbei handelt es sich um Extrusionsgranulate. Dem Fachmann ist bekannt, dass Kunststoffextrusion mit Eisenoxid aufgrund der Abrasionseigenschaften des Pigmentes zu großem Verschleiß der Geräte führt, die bei der Asphaltverarbeitung eingesetzt werden.

In US 6,706,110 B2 und US 6,780,234 B2 wurden Pigmentgranulate für die Einfärbung von unpolaren Medien wie Asphalt und Bitumen unter Zusatz von Wachsen und Dispergiermittel für polare Medien offenbart. Bei dem Verfahren handelt es sich um ein Sprühgranulationsverfahren von wässrigen Systemen. Die Sprühgranulation erfordert wegen der Tropfenbildung die Verwendung von gut fließfähigen, also dünnflüssigen Suspensionen. Da für den Trocknungsvorgang eine größere Menge an Wasser zu verdampfen ist, ist das Verfahren jedoch energieaufwändig und deshalb vor allem dann vorteilhaft anzuwenden, wenn die zu granulierenden Pigmente bedingt durch den Pigmentherstellungsprozess in der Nassphase, beispielsweise in einer wässrigen Suspension oder Paste, vorliegen. Bei Pigmenten, die über einen trockenen Herstellungsprozess, beispielsweise einen Glühprozess, hergestellt wurden, bedeutet die Sprühgranulation einen zusätzlichen Verfahrensschritt, da das bereits in trockenem Zustand anfallende Pigment wieder in Wasser aufgeschlämmt und getrocknet werden muss. Zusätzlich weisen die Sprühgranulate eine Korngröße zwischen 20 bis 500 μm auf, was bei der Dosierung signifikante Staubentwicklung verursacht. In der Asphaltverarbeitung werden aus der Sichtweise des Arbeitsschutzes Partikel mit einer Korngröße von kleiner als 1 mm noch als Staub angesehen.

Die nach dem Stand der Technik bereitgestellten Pigmentzusammensetzungen eignen sich also nicht für eine wirtschaftliche und unter arbeitstechnischen Gesichtspunkten vertretbare Verwendung zur Einfärbung von Baustoffen, die bei höheren Temperaturen als Umgebungstemperatur verarbeitet werden, wie Asphalt, Bitumen, bituminöse Mischungen, Teer und teerhaltige Zusammensetzungen.

Der vorliegenden Erfindung lag daher die Aufgabe zugrunde, staubarme, gut dosierbare anorganische Pigmente enthaltende Mittel bereitzustellen, die wirtschaftlich herstellbar sind und die sich zum Einfärben von Baustoffen eignen, die bei höheren Temperaturen als Umgebungstemperatur verarbeitet werden.

Überraschenderweise gelingt die Lösung der gestellten Aufgabe durch die Bereitstellung von Mitteln enthaltend mindestens ein anorganisches Pigment, ein oder mehrere Öle und ein oder mehrere Wachse.

Gegenstand der Erfindung ist daher ein Mittel, enthaltend mindestens ein anorganisches Pigment, ein oder mehrere Öle und ein oder mehrere Wachse, bei dem mindestens 50 Gew.%, bevorzugt mindestens 70 Gew. %, besonders bevorzugt mindestens 80 Gew.%, des Mittels eine Korngröße von 1 mm oder größer, bevorzugt von 1 bis 10 mm, besonders bevorzugt von 1 bis 6 mm, aufweisen, dadurch gekennzeichnet, dass das Mittel einen Abriebswert von 10 Gew.% oder weniger, bevorzugt von 5 Gew.% oder weniger und besonders bevorzugt von 2 Gew.% oder weniger, aufweist. Unter Abriebswert wird im Sinne der Erfindung der prozentuale Gewichtsanteil an Unterkorn verstanden, der in dem nach dem unter "Beispiele und Methoden" beschriebenen Abriebstest nach einer Aufwirbelung des Mittels über einen Zeitraum von 5 Minuten gemessen wurde.

Das erfindungsgemäße Mittel erfüllt die Anforderungen bezüglich der Dispergierbarkeit in den Anwendungsmedien und bezüglich des erzielten Farbtons im Vergleich zum ungranulierten anorganischen Pigment in den gefärbten Anwendungsmedien.

Das erfindungsgemäße Mittel liegt in stückiger Form vor. Unter "Mittel" sind im Folgenden Agglomerate von Primärpartikeln zu verstehen, die sich von der maximalen räumlichen Ausdehnung her von der der Primärpartikel unterscheiden. Unter "Mittel" werden auch Granulate verstanden. Unter "Granulat" bzw. "in Granulatform" wird im Kontext der Erfindung jedes Material verstanden, dessen mittlere Korngröße im Vergleich mit den Ausgangsmaterialien durch einen Behandlungsschritt vergrößert worden ist. "Granulat" bzw. "in Granulatform" umfasst daher nicht nur Sprühgranulate, Kompaktierungsgranulate (Press- oder Brikettiergranulate) oder Aufbaugranulate, sondern auch zum Beispiel Produkte einer Nass- oder Feuchtbehandlung mit anschließender Zerkleinerung, und Produkte trockener oder im Wesentlichen trockener Verarbeitungsschritte, zum Beispiel trocken hergestellte Granulate, Briketts und dergleichen. Bevorzugt sind die erfindungsgemäßen Mittel Aufbaugranulate, besonders bevorzugt welche, die über einen beheizbaren Mischer hergestellt werden.

Die erfindungsgemäßen Mittel liegen bevorzugt in Form von sphärischen Agglomeraten vor, wobei diese eine Kugelform oder eine ellipsoide Form sowie deren Zwischenformen aufweisen können.

Es sei darauf hingewiesen, dass vom Umfang der Erfindung auch beliebige Kombinationen der genannten Bereiche und Vorzugsbereiche für jedes Merkmal einschließlich von Kombinationen von Vorzugsbereichen umfasst sind.

In den erfindungsgemäßen Mitteln sind die anorganischen Pigmente bevorzugt aus der Gruppe von Eisenoxiden, Eisenoxidhydroxiden, Chromoxiden, Titandioxiden und/oder Mischphasenpigmenten auf Basis von Metalloxiden ausgewählt. Zu den Eisenoxiden gehören beispielsweise Hämatit (Eisenoxid Rot) oder Magnetit (Eisenoxid Schwarz). Zu den Eisenoxidhydroxiden gehört z.B. Goethit (Eisenoxid Gelb). Mischphasenpigmente auf Basis von Metalloxiden sind z.B. Zinkferrite (Mischphasenpigment aus Zinkoxid und Eisenoxid) oder Manganferrite (Mischphasenpigment aus Manganoxid und Eisenoxid). Das erfindungsgemäße Mittel kann ein oder mehrere anorganische Pigmente enthalten. Bevorzugt enthält das erfindungsgemäße Mittel ein anorganisches Pigment.

Die erfindungsgemäßen Mittel enthalten ein oder mehrere Öle. Als Öle werden in dem erfindungsgemäßen Zusammenhang unpolare oder leicht polare, nicht leichtflüchtige, bei Raumtemperatur flüssige Substanzen verstanden.

Bevorzugt sind Öle mit einer kinematischen Viskosität von 1,6 bis 1.500 mm$^2$/s bei 40°C (gemessen nach DIN 51562). In den erfindungsgemäßen Mitteln sind weiterhin bevorzugt die Öle aus der Gruppe von synthetischen Ölen, die im Wesentlichen aus den Elementen Kohlenstoff und Wasserstoff und/oder Stickstoff und/oder Sauerstoff und/oder Schwefel und/oder Halogenen (vorzugsweise Fluor, Chlor, Brom und/oder Iod) und/oder Bor bestehen, mineralischen Ölen, tierischen und/oder pflanzlichen Ölen ausgewählt. Besonders bevorzugt sind in den erfindungsgemäßen Mitteln synthetische Öle auf Kohlenwasserstoffbasis oder mineralische (aus Erdölen oder Kohlen gewonnene) Öle enthalten.

In den erfindungsgemäßen Mitteln beträgt die Gesamtmenge an Öl oder Ölen bevorzugt von 0,1 bis 5,0 Gew.%, besonders bevorzugt von 0,4 % bis 3,0 Gew.%, ganz besonders bevorzugt von 0,5 bis 2,45 Gew.%, bezogen auf die Gesamtmenge des Mittels. Das erfindungsgemäße Mittel kann ein oder mehrere Öle enthalten. Bevorzugt enthält das erfindungsgemäße Mittel ein Öl.

In den erfindungsgemäßen Mitteln beträgt die Gesamtmenge an Wachs oder Wachsen bevorzugt von größer als 10 bis 25 Gew.%, besonders bevorzugt von 13 bis 20 Gew.%, bezogen auf die Gesamtmenge des Mittels. Das erfindungsgemäße Mittel kann ein oder mehrere Wachse enthalten. Bevorzugt enthält das erfindungsgemäße Mittel ein Wachs.

Unter Wachs wird eine Substanz verstanden, die grob bis feinkristallin ist, über 40°C ohne Zersetzung schmilzt und schon wenig oberhalb des Schmelzpunktes verhältnismäßig niedrigviskos und nicht fadenziehend ist. Vorzugsweise enthält das erfindungsgemäße Mittel ein oder mehrere höher schmelzende natürliche und/oder chemisch modifizierte und/oder synthetische Wachse. Bevorzugt sind die Wachse aus der Gruppe von Fischer-Tropsch Wachsen, Mineralwachsen, Montanwachsen, pflanzlichen Wachsen und/oder tierischen Wachsen ausgewählt. Fischer-Tropsch Wachse sind synthetische aliphatische Kohlenwasserstoffe, d.h. synthetische Paraffin-Wachse mit hoher Molekülmasse und einer Kettenlänge von 20 bis 120 Kohlenstoffatomen. Zu der Gruppe der Fischer-Tropsch Wachse gehören auch oxidierte Fischer-Tropsch Wachse. Fischer-Tropsch Wachse weisen in der Regel einen Erstarrungspunkt von größer als 70°C auf. Sie sind relativ hart, was über die Nadelpenetration bei 25°C in der Einheit "mm" gemessen werden kann. Für die Messung der Nadelpenetration bei unterschiedlichen Temperaturen, wie z.B. 25°C oder 65°C existieren z.B. die Methoden nach ASTM D 1321 oder DIN 51579. Für diese Wachse liegen typische Werte der Nadelpenetration bei 25°C im Bereich von 0,1 mm bis 1 mm Fischer-Tropsch Wachse werden über das sogenannten Fischer-Tropsch-Verfahren aus Synthesegas (Wasserstoff, Kohlenmonoxid) aus Kohlevergasung oder aus Erdgas in Gegenwart von Katalysatoren hergestellt. Mineralwachse sind Gemische normaler, verzweigtkettiger und ringförmiger gesättigter Kohlenwasserstoffe, die durch Raffination von Wachsen fossilen Ursprungs gewonnen werden, wie z.B. Ceresin. Zu der Gruppe der Mineralwachse gehören auch die mikrokristallinen Hartwachse. Montanwachse sind aus Braunkohlesorten extrahierbare natürliche Wachse. Diese sind aus Harzen, Wachsen u. Fetten tertiärer Pflanzen entstanden. Pflanzliche Wachse sind z.B. Zuckerrohrwachs oder Carnaubawachs. Zu den tierischen Wachsen gehören Walrat, Wollwachs und Bienenwachs. Die Wachse können dabei in ihrer ursprünglichen, d.h. nicht chemisch modifizierten Form, oder in deren chemisch modifizierten Formen vorliegen.

Bevorzugt enthalten die erfindungsgemäßen Mittel Fischer-Tropsch Wachse und/oder Mineralwachse. Aus der Gruppe der Mineralwachse sind mikrokristalline Hartwachse besonders bevorzugt.

Insbesondere weisen die Wachse einen Erstarrungspunkt zwischen 50 und 140°C, bevorzugt zwischen 70 und 120°C, besonders bevorzugt zwischen 80 und 110°C auf. Bevorzugt enthalten die erfindungsgemäßen Mittel Wachse mit einer dynamischen Viskosität bei 120°C unter 800 mPas, besonders bevorzugt unter 300 mPas, ganz besonders bevorzugt von 1 bis 100 mPas.

Die physikalische Eigenschaft des Erstarrungspunktes, der eine größere technische Bedeutung für die Verarbeitung von Wachsen als der Schmelzpunkt hat, wird bei Wachsen oft anstatt des Schmelzpunktes gemessen. Der Erstarrungspunkt kann nach ISO 2207 oder auch nach ASTM D 938 gemessen werden.

Die erfindungsgemäßen Mittel können zusätzlich weitere Hilfsstoffe enthalten, die jedoch die Eigenschaften des Mittels wie Staubverhalten, Dosierbarkeit und Dispergierbarkeit nicht verschlechtern dürfen, oder das erfindungsgemäße Mittel enthält diese weiteren Hilfsstoffe eben nicht.

Das erfindungsgemäße Mittel enthält besonders bevorzugt die Kombination aus Eisenoxid oder Chromoxid, einem mineralischen Öl und einem mikrokristallinen Hartwachs.

Die Erfindung betrifft auch Verfahren zur Herstellung der erfindungsgemäßen Mittel, dadurch gekennzeichnet, dass entweder

a) mindestens ein anorganisches Pigment mit einem oder mehreren Ölen vermischt und

b) das Gemisch aus Schritt a) mit einem oder mehreren Wachsen vermischt wird,

c) die Mischung aus Schritt b) bei einer Temperatur oberhalb des Erstarrungspunktes des Wachses oder der Wachse weiter gemischt wird, (Variante A)
oder

a') mindestens ein anorganisches Pigment mit einem oder mehreren Wachsen vermischt und

b') das Gemisch aus Schritt a') mit einem oder mehreren Ölen vermischt wird,

c') die Mischung aus Schritt b') bei einer Temperatur oberhalb des Erstarrungspunktes des Wachses oder der Wachse weiter gemischt wird, (Variante B)

oder

mindestens ein anorganisches Pigment gleichzeitig mit einem oder mehreren Ölen und mit einem oder mehreren Wachsen vermischt wird, und die Mischung anschließend bei einer Temperatur oberhalb des Erstarrungspunktes des Wachses oder der Wachse weiter gemischt wird (Variante C).

Die Bildung des Mittels kann in diesem Zusammenhang auch als Granulataufbau bezeichnet werden. In bevorzugten Ausführungsformen der Varianten A, B und C des erfindungsgemäßen Verfahrens werden als Öle und Wachse die spezifischen Produkte eingesetzt, die unter diesen generischen Begriffen bei der Beschreibung des erfindungsgemäßen Mittels selbst offenbart wurden.

Die Herstellungsverfahren der Varianten A, B und C umfassen bevorzugt die Schritte, dass das entstandene Mittel auf Umgebungstemperatur abgekühlt und anschließend auf einen Korngrößenbereich gesiebt wird, sodass mindestens 50 Gew.-%, bevorzugt mindestens 70 Gew. %, besonders bevorzugt mindestens 80 Gew.%, des Mittels eine Korngröße von 1 mm oder größer, bevorzugt von 1 bis 10 mm, besonders bevorzugt von 1 bis 6 mm, aufweisen, oder es umfasst diese Schritte eben nicht. Dabei kann das Abkühlen des Mittels auf Umgebungstemperatur in einem Schwingförderer oder Wirbelbettkühler oder auf andere Weise mit flüssigen oder gasförmigen Medien durchgeführt werden oder eben nicht. Bei der Ausübung der Herstellungsverfahren der Varianten A, B und C ist es auch möglich, dass das nach der Siebung erhaltene Ober- und/oder Unterkorn, also das Mittel oberhalb und/oder unterhalb der gewünschten Korngröße, in das Herstellungsverfahren des Mittels zurückgeführt wird oder eben nicht. Während des Herstellungsverfahrens bilden sich dann aus dem zurückgeführten Ober- und/oder Unterkorn zusammen mit den anderen Komponenten, die in das Verfahren eingesetzt werden, die erfindungsgemäßen Mittel.

Bei dem erfindungsgemäßen Verfahren werden in den Ausführungsformen, in der die Zugabe des Öls oder der Öle, und des Wachses oder der Wachse zum anorganischen Pigment nacheinander erfolgt (Varianten A und B), die Schritte a) oder a') bevorzugt unterhalb der Erstarrungspunkte des Wachses oder der Wachse durchgeführt. Die Zugabe des Öls bzw. der Öle in Variante A oder des Wachses bzw. der Wachse in Variante B zum anorganischen Pigment kann vor Beginn oder während des Mischvorganges durchgeführt werden. In Variante A findet während des Mischvorganges eine gleichmäßige Verteilung des Öls auf dem anorganischen Pigment statt. Dabei bleibt das Pulver fließfähig. Anschließend wird die Mischung bevorzugt vor den Schritten b) oder b') auf 60 bis 150°C, besonders bevorzugt auf 90 bis 140°C, aufgeheizt. Dann werden in Variante A das Wachs bzw. die Wachse in Form von Pulver, Flocken, Stücken oder geschmolzen zu dem mit Öl behandelten anorganischen Pigment oder in Variante B das Öl bzw. die Öle zu dem mit dem Wachs vermischten anorganischen Pigment gegeben. Danach wird die Mischung auf eine Temperatur oberhalb der Erstarrungspunkte des Wachses oder der Wachse erhöht. Bevorzugt werden die Schritte c) oder c') bei 110°C bis 230°C durchgeführt. Die Temperaturerhöhung wird entweder durch die Scherkräfte während des Mischvorganges und/oder durch externe Wärmezufuhr erzeugt. Dabei schmilzt das Wachs und verteilt sich auf dem mit Öl behandelten anorganischen Pigment, wobei die Bildung des Mittels erfolgt.

Bei dem erfindungsgemäßen Verfahren wird in der Ausführungsform, in der die Zugabe des Öls oder der Öle, des Wachses oder der Wachse zum anorganischen Pigment gleichzeitig erfolgt (Variante C), das Vermischen des anorganischen Pigments mit dem oder den Ölen und dem oder den Wachsen bei Temperaturen unterhalb oder oberhalb der Erstarrungspunkte der Wachse durchgeführt. Bevorzugt erfolgt das Vermischen des anorganischen Pigments mit dem oder den Ölen, dem Wachs oder den Wachsen bei Temperaturen unterhalb der Erstarrungspunkte der Wachse. Anschließend wird die Temperatur der Mischung auf eine Temperatur oberhalb der Erstarrungspunkte des Wachses oder der Wachse, bevorzugt auf 110°C bis 230°C, erhöht und der Mischvorgang weiter fortgeführt. Die Temperaturerhöhung wird entweder durch die Scherkräfte während des Mischvorganges und/oder durch externe Wärmezufuhr erzeugt. Dabei schmilzt das Wachs und verteilt sich mit dem Öl auf dem anorganischen Pigment, wobei die Bildung des Mittels erfolgt.

Für das Mischen können verschiedene beheizbare Mischaggregate mit ausreichenden Mischwirkung und Scherkräften eingesetzt werden. Bevorzugt wird als Mischer ein beheizbarer Henschel-Mischer eingesetzt.

Die Korngröße der erfindungsgemäßen Mittel nimmt bei den Herstellungsverfahren der Varianten A, B und C während des Mischvorganges stetig zu. Der Mischungsvorgang wird daher zum geeigneten Zeitpunkt abgebrochen. Wird der Mischvorgang zu kurz durchgeführt, werden Mittel mit zu kleiner Teilchengröße erhalten. Bei einer zu langen Mischzeit werden die Mittel zu grob, was die Dispergierbarkeit in Asphalt negativ beeinflussen kann. Dies führt zu einer ungleichmäßigen Färbung des Asphaltes. Der Mischvorgang wird deshalb dann abgebrochen, wenn der maximale prozentuale Anteil des Mittels mit einer Korngröße von 1 mm oder größer, bevorzugt von 1 bis 10 mm, besonders bevorzugt von 1 bis 6 mm, bezogen auf die Gesamtmenge des Mittels, erreicht wurde.

Nach Abbruch des Mischvorganges in den Varianten A, B und C des erfindungsgemäßen Herstellungsverfahrens wird das erfindungsgemäße Mittel auf Umgebungstemperatur abgekühlt und anschließend auf einen Korngrößenbereich gesiebt, sodass mindestens 50 Gew.-% des Mittels eine Korngröße von 1 mm oder größer, bevorzugt mindestens 70 Gew. % des Mittels eine Korngröße von 1 mm oder größer, besonders bevorzugt mindestens 80 Gew.% des Mittels eine Korngröße von 1 mm oder größer,

oder

mindestens 50 Gew.-% des Mittels eine Korngröße von 1 bis 10 mm, bevorzugt mindestens 70 Gew. % des Mittels eine Korngröße von 1 bis 10 mm, besonders bevorzugt mindestens 80 Gew.% des Mittels eine Korngröße von 1 bis 10 mm,

oder

mindestens 50 Gew.-% des Mittels eine Korngröße von 1 bis 6 mm, bevorzugt mindestens 70 Gew. % des Mittels eine Korngröße von 1 bis 6 mm, besonders bevorzugt mindestens 80 Gew.% des Mittels eine Korngröße von 1 bis 6 mm, aufweisen.

Das erfindungsgemäße Mittel zeichnet sich aus durch eine gute Fließfähigkeit, durch einen geringen Staubanteil, eine gute Abriebstabilität sowie durch eine hohe Dispergierbarkeit in bitumen- oder teerhaltigen Baustoffen sowie durch einen ähnlich hohen und vergleichbaren Farbton im Anwendungsmedium im Vergleich zum ungranulierten anorganischen Pigment.

Die Erfindung betrifft auch die Verwendung des erfindungsgemäßen Mittels zum Einfärben von Baustoffen, vorzugsweise Asphalt, Bitumen, bituminösen Mischungen, Teer und teerhaltigen Zusammensetzungen. Hierzu wird das erfindungsgemäße Mittel dem Baustoff bei einer Temperatur oberhalb seines Erstarrungspunktes unter Mischen zugegeben. Der Mischvorgang wird fortgesetzt, bis die gleichmäßige Färbung des Baustoffes erreicht ist.

Die Erfindung betrifft auch ein Verfahren zum Einfärben von Baustoffen, vorzugsweise Asphalt, Bitumen, bituminösen Mischungen, Teer und teerhaltigen Zusammensetzungen, umfassend Mischen des erfindungsgemäßen Mittels mit dem Baustoff oberhalb dessen Erweichungspunktes. Dabei wird der Baustoff solange mit dem Mittel gemischt, bis die gleichmäßige Färbung des Baustoffes erreicht ist.

Die Erfindung betrifft ebenfalls Baustoffe, vorzugsweise Asphalt, Bitumen, bituminöse Mischungen, Teer und teerhaltige Zusammensetzungen, die mit dem erfindungsgemäßen Mittel gefärbt sind.

Der Gegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

**Beispiele und Methoden**

**I. Beschreibung der verwendeten Mess- und Prüfmethoden**

Die Ergebnisse der Messungen zu den Beispielen 1 und 2 sind in Tabelle 1 zusammengefasst.

**I.1 Dispergierbarkeit in Asphalt**

Die Bestimmung der Dispergierbarkeit in Asphalt erfolgte nach folgendem Verfahren: die Zuschläge (mineralische Füllstoffe zur Herstellung des Asphalts) wurden in einem beheizbaren Labormischer (Rego-Mischer) zusammen mit einem Straßenbaubitumen des Typs Pigmental® 50/70 (Handelsprodukt der Fa. TOTAL Bitumen Deutschland GmbH) 30 Sekunden lang bei 180 °C homogenisiert. Danach wurde die zu messende Pigmentprobe, d.h. die Mittel gemäß den Beispielen, zugegeben und weitere 120 Sekunden bei der Temperatur gemischt. Jeweils wurden 3 Gew.% Pigmentprobe zugegeben, bezogen auf die gesamte Zusammensetzung. Mit der Mischung werden Prüfkörper nach Marshall hergestellt ("The Shell Bitumen Handbook, Shell Bitumen U.K., 1990, Seite 230-232). Farbtonunterschiede der Marshall-Körper wurden farbmetrisch durch Vergleich der Rotwerte a* im Purton (gegen einen Marshall-Körper beurteilt, der mit einer gleichen Menge an Bayferrox® 130-Pulverbezug (Eisenoxid-Rotpigment der Firma LANXESS Deutschland GmbH) hergestellt wurde (Messgerät: Minolta Chromameter II, Normlichtart C, CIELAB-System, DIN 5033, DIN 6174). Unterschiede in den a*-Werten (Δa*-Werte) kleiner 1,0 CIELAB Einheiten sind visuell nicht unterscheidbar. Ist der Betrag des a*-Wertes des Prüfkörpers, der mit der zu messenden Probe gefärbt wurde, kleiner als der des Prüfkörpers, der mit dem Bayferrox® 130-Pulverbezug gefärbt wurde, weist dies auf eine geringere Dispergierbarkeit der zu messenden Probe im Vergleich zum Pulverbezug hin. Je kleiner der Betrag des Δa*-Werte bei dieser Messung ist, desto ähnlicher ist der Farbton der unterschiedlichen Messungen, was auf einen geringen Unterschied der Dispergierbarkeit der zu messenden Probe im Vergleich zu dem Bayferrox® 130-Pulverbezug hinweist.

**I.2 Bestimmung der Kornfraktion der Mittel**

Die Bestimmung der Kornfraktion wurde mit einem Vibrationssiebgerät Retsch Vibtronic Typ VE 1 mit Siebsätzen mit 1 und 6 mm durchgeführt (Siebsätze nach DIN ISO 3310). Das Mittel (50,0g) wurde auf das oberste, größte Sieb eingewogen. Der Siebsatzturm wurde 2 min mit Schwingungsintensität 1 mm vibriert. Danach wurde jedes einzelne Sieb gewogen und die Siebfraktion bestimmt.

**I.3 Bestimmung des Abriebswertes der Mittel**

Die Bestimmung des Abriebswertes wurde mit einer Rhewum-Luftstrahlsiebmaschine LPS 200 MC durchgeführt. Folgende Einstellungen wurden gewählt: Düse 1 mm, Volumenstrom 35 m³/h, 1 mm Sieb, Drehzahl 18 rpm. Das Sieb nach DIN ISO 3310 wurde leer und anschließend mit 20 g Probe ausgewogen. Danach wurde die Siebmaschine eingeschaltet und die Probe wurde 1, 2, 3, 4 und 5 Minuten beansprucht (das Siebgut wurde durch den Luftstrahl aufgewirbelt). Nach jeder Minute wurde das Sieb mit der Probe gewogen und später auf die Maschine gesetzt und weitere Zeit gesiebt.

Berechnung:

$$\text{(20g (Einwaage) - Auswaage) / 20g Einwaage x 100} =$$

$$\text{Gew.\% Unterkorn (Abriebswert)}$$

Als gute Abriebsstabilität (= niedriger Abriebswert) gemäß diesem Test wird eine Menge von 10 Gew.% oder weniger, bevorzugt 5 Gew.% oder weniger und besonders bevorzugt von 2 Gew.% oder weniger, an Unterkorn gemessen nach einer Aufwirbelung des Siebgutes über einen Zeitraum von 5 Minuten (= Abriebswert nach 5 min., s. Tabelle 1) definiert.

**II: Beispiele**

**Eigenschaften der verwendeten anorganischen Pigmente, Öle und Wachse**

**Bayferrox® 130 Pigmentpulver** der Fa. LANXESS Deutschland GmbH: Hämatit (rotes Eisenoxid) mit der BET-Oberfläche (nach DIN ISO 9277) 7-9 m²/g

**Energol RC-R 100** der Fa. BP: mineralisches Öl mit der kinematischen Viskosität ca. 60 cm²/h (100 cSt) bei 40°C (DIN 51562)

**Tecero® 30332:** mikrokristallines Wachs der Fa. Wachs- u. Ceresin-Fabriken Th. C. Tromm GmbH; Eigenschaften: Erstarrungspunkt (ISO 2207): 90 - 95°C, Penetration bei 25°C (DIN 51 579) 0,4 - 0,7 mm, Viskosität bei 120°C (DIN 53 019) 7 - 11 mPas

**Beispiel 1**

Zu 15,0 kg Eisenoxidrot-Pigment Bayferrox® 130 wurden 0,150 kg Verdichteröl Energol RC-R 100 bei Raumtemperatur zugegeben und die Mischung wurde in einem 75L Henschelmischer Typ FM75 auf ca. 100°C aufgeheizt und bis ca. 5 Min. gemischt und danach erfolgte die Zugabe von 2,65 kg Tecerowachs® 30332 und die gesamte Mischung wurde weiter ungefähr 25 Min. gemischt (Werkzeugdrehzahl ca. 780 rpm) und dabei bis ca. 180°C erwärmt. Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Beispiel 2**

Zu 15,0 kg Eisenoxidrot-Pigment Bayferrox® 130 wurden 0,150 kg Verdichteröl Energol RC-R 100 und 2,70 kg Tecerowachs® 30332 bei Raumtemperatur zugegeben. Die Mischung wurde in einem 75L Henschelmischer Typ FM75 ca. 15 Min. gemischt (Werkzeugdrehzahl ca. 780 rpm) und dabei bis ca. 180°C erhitzt. Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Tabelle 1: Erfindungsgemäße Beispiele.**

| | Öl: Energol RC-R 100 | Wachs: Tecero®-Wachs 30332 | Ausbeute der Sieb-fraktion 1-6 mm | Dispergier barkeit, gemessen über Δa* a) | Abriebs wert (nach 5 Min.) |
|---|---|---|---|---|---|
| Mittel gemäß | Gew.% (bezogen auf Gesamtgewicht) | | Gew.% | CIELAB Einheiten | Gew.% |
| Beispiel 1 | 0,84 | 14,9 | >70 | ± 1,0 | <5 |
| Beispiel 2 | 0,84 | 15,1 | >70 | ± 1,0 | <5 |
| a) gemessen wurde die Differenz Δa* (= delta a*) = a*-Wert (Mittel) minus a*-Wert (Bezug) im Bitumen. Bezug: Bayferrox 130 Ausgangsmaterial | | | | | |

In den Beispielen 1 und 2 wurden Mittel mit den Ausbeuten für die Kornfraktion 1 - 6 mm über 70 Gew.% mit guten Farbeigenschaften erhalten. Farbmetrisch waren die Proben vergleichbar mit dem Bayferrox® 130 Pulverbezug (Ausgangsmaterial). Diese Mittel weisen eine sehr gute Abriebstabilität (= niedriger Abriebswert) auf (Tabelle 1).

**Beispiel 3 (Vergleichsbeispiel)**

Zu 15,0 kg Eisenoxidrot-Pigment Bayferrox® 130 wurden 1,50 kg Mikrowachs Tecerowachs® 30332 zugegeben und die Mischung wurde in einem 75L Henschelmischer Typ FM75 bis ca. 150°C aufgeheizt und dabei ca. 70 Min. gemischt (Werkzeugdrehzahl ca. 780 rpm, die Temperatur wurde im Produkt gemessen). Weder nach 20 Min. noch nach 70 Min. wurden Mittel in stückiger Form erhalten. Das Produkt blieb über die gesamte Mischzeit in Pulverform. Die Ausbeute für die Kornfraktion 1 - 6 mm betrug damit 0 Gew.%.

**Beispiel 4 (Vergleichsbeispiel)**

Zu 15,0 kg Eisenoxidrot-Pigment Bayferrox® 130 wurden 15,0 kg Mikrowachs Tecerowachs® 30332 zugegeben und die Mischung wurde in einem 75L Henschelmischer Typ FM75 bis ca. 140°C aufgeheizt und dabei ca. 30 Min. gemischt (Werkzeugdrehzahl ca. 780 rpm, die Temperatur wurde im Produkt gemessen). Weder nach 20 Min. noch nach 30 Min. wurden Mittel in stückiger Form erhalten. Das Produkt war pastös. Die Ausbeute für die Kornfraktion 1 - 6 mm betrug damit 0 Gew.%.

**Beispiel 5 (Vergleichsbeispiel)**

Hier wurde das Beispiel 1 aus dem Patent EP 0 567 882 B1 (Herstellung eines Mittels über Tellergranulation) wiederholt. Es wurde eine Farbverschiebung Δa* von -0,6 CIELAB Einheiten gegen Bayferrox® 130 Pulver (Standard 2001) gefunden. Allerdings wies das Mittel eine nur sehr geringe Abriebstabilität auf (Abriebswert nach 5 Minuten von mehr als 20 Gew.%).

**Patentansprüche**

1. Mittel enthaltend mindestens ein anorganisches Pigment ausgewählt aus der Gruppe von Eisenoxiden, Eisenoxidhydroxiden, Chromoxiden, Titandioxiden und/oder Mischphasenpigmenten auf Basis von Metalloxiden, ein oder mehrere Öle und ein oder mehrere Wachse, bei dem mindestens 50 Gew.% des Mittels eine Korngröße von 1 mm oder größer aufweisen, **dadurch gekennzeichnet, dass** die Gesamtmenge an Wachs oder Wachsen von größer als 10 bis 25 Gew.%, bezogen auf die Gesamtmenge des Mittels, und die Gesamtmenge an Öl oder Ölen von 0,1 bis 5,0 Gew.%, bezogen auf die Gesamtmenge des Mittels, beträgt und das Mittel einen Abriebswert von 10 Gew.% oder weniger aufweist.

2. Mittel gemäß Anspruch 1, **dadurch gekennzeichnet, dass** die Öle aus der Gruppe von synthetischen Ölen, die im Wesentlichen aus den Elementen Kohlenstoff und Wasserstoff und/oder Stickstoff und/oder Sauerstoff und/oder Schwefel und/oder Halogenen und/oder Bor bestehen, mineralischen Ölen, tierischen und/oder pflanzlichen Ölen ausgewählt sind.

3. Mittel gemäß Anspruch 1 oder 2, **dadurch gekennzeichnet, dass** die Wachse einen Erstarrungspunkt zwischen 50 und 140°C aufweisen.

4. Mittel gemäß einem oder mehreren der Ansprüche 1 bis 3, **dadurch gekennzeichnet, dass** die Wachse aus der Gruppe von Fischer-Tropsch Wachsen, Mineralwachsen, Montanwachsen, pflanzlichen Wachsen und/oder tierischen Wachsen ausgewählt sind.

5. Mittel gemäß einem oder mehreren der Ansprüche 1 bis 4, **dadurch gekennzeichnet, dass** die Gesamtmenge an Wachs oder Wachsen von 13 bis 20 Gew.%, bezogen auf die Gesamtmenge des Mittels, beträgt.

6. Verfahren zur Herstellung von Mitteln gemäß einem oder mehreren der Ansprüche 1 bis 5, **dadurch gekennzeichnet, dass** entweder

   a) mindestens ein anorganisches Pigment mit einem oder mehreren Ölen vermischt und
   b) das Gemisch aus Schritt a) mit einem oder mehreren Wachsen vermischt wird,
   c) die Mischung aus Schritt b) bei einer Temperatur oberhalb des Erstarrungspunktes des Wachses oder der Wachse weiter gemischt wird,
   oder

   a') mindestens ein anorganisches Pigment mit einem oder mehreren Wachsen vermischt und
   b') das Gemisch aus Schritt a') mit einem oder mehreren Ölen vermischt wird,
   c') die Mischung aus Schritt b') bei einer Temperatur oberhalb des Erstarrungspunktes des Wachses oder der Wachse weiter gemischt wird,
   oder
   mindestens ein anorganisches Pigment gleichzeitig mit einem oder mehreren Ölen und mit einem oder mehreren Wachsen vermischt wird, und die Mischung anschließend bei einer Temperatur oberhalb des Erstarrungspunktes des Wachses oder der Wachse weiter gemischt wird.

7. Verfahren zur Herstellung von Mitteln gemäß Anspruch 6, **dadurch gekennzeichnet, dass** das entstandene Mittel auf Umgebungstemperatur abgekühlt und anschließend auf einen Korngrößenbereich gesiebt wird, sodass mindestens 50 Gew.-% des Mittels eine Korngröße von 1 mm oder größer aufweisen.

8. Verfahren zur Herstellung von Mitteln gemäß Anspruch 6 oder 7, **dadurch gekennzeichnet, dass** die Schritte a) oder a') bei einer Temperatur unterhalb der Erstarrungspunkte der Wachse durchgeführt werden.

9. Verfahren zur Herstellung von Mitteln gemäß einem oder mehreren der Ansprüche 6 bis 8, **dadurch gekennzeichnet, dass** die Mischung vor den Schritten b) oder b') auf 60°C bis 150°C aufgeheizt wird.

10. Verfahren zur Herstellung von Mitteln gemäß einem oder mehreren der Ansprüche 6 bis 9, **dadurch gekennzeichnet, dass** die Schritte c) oder c') bei 110 bis 230°C durchgeführt werden.

11. Verfahren zur Herstellung von Mitteln gemäß einem oder mehreren der Ansprüche 6 bis 10, **dadurch gekennzeichnet, dass** nach gleichzeitiger Zugabe von Öl oder Ölen, Wachs oder Wachsen zum anorganischen Pigment die Temperatur dieser Mischung auf 110°C bis 230°C erhöht wird.

12. Verwendung von Mitteln gemäß einem oder mehreren der Ansprüche 1 bis 5 zum Einfärben von Baustoffen, vorzugsweise Asphalt, Bitumen, bituminösen Mischungen, Teer und teerhaltigen Zusammensetzungen.

13. Verfahren zum Einfärben von Baustoffen, vorzugsweise Asphalt, Bitumen, bituminösen Mischungen, Teer und teerhaltigen Zusammensetzungen umfassend Mischen des Mittels gemäß einem oder mehreren der Ansprüche 1 bis 5 mit dem Baustoff oberhalb dessen Erweichungspunktes.

14. Baustoffe, **dadurch gekennzeichnet, dass** sie mit Mitteln gemäß einem oder mehreren der Ansprüche 1 bis 5 eingefärbt sind.

**Claims**

1. Agent containing at least one inorganic pigment selected from the group of iron oxides, iron oxide hydroxides, chromium oxides, titanium dioxides and/or mixed-phase pigments based on metal oxides, one or more oils, and one or more waxes where at least 50 wt% of the agent has a particle size of 1 mm or more, **characterized in that** the total amount of wax or waxes is greater than 10 to 25 wt%, based on the total amount of the agent, and the total amount of oil or oils is from 0.1 to 5.0 wt%, based on the total amount of the agent, and the agent has an attrition value of 10 wt% or less.

2. Agent according to Claim 1, **characterized in that** the oils are selected from the group of synthetic oils consisting essentially of the elements carbon and hydrogen and/or nitrogen and/or oxygen and/or sulfur and/or halogens and/or boron; mineral oils; animal and/or vegetable oils.

3. Agent according to Claim 1 or 2, **characterized in that** the waxes have a congealing point between 50 and 140°C.

4. Agent according to one or more of Claims 1 to 3, **characterized in that** the waxes are selected from the group of Fischer-Tropsch waxes, mineral waxes, montan waxes, vegetable waxes and/or animal waxes.

5. Agent according to one or more of Claims 1 to 4, **characterized in that** the total amount of wax or waxes is from 13 to 20 wt% based on the total amount of the agent.

6. A process for producing agents according to one or more of Claims 1 to 5, **characterized in that** either

   a) at least one inorganic pigment is mixed with one or more oils and
   b) the mix of step a) is mixed with one or more waxes,
   c) the mixture of step b) is further mixed at a temperature above the congealing
   point of the wax or of the waxes,
   or

   a') at least one inorganic pigment is mixed with one or more waxes and
   b') the mix of step a') is mixed with one or more oils,
   c') the mixture of step b') is further mixed at a temperature above the congealing
   point of the wax or of the waxes,
   or
   at least one inorganic pigment is simultaneously mixed with one or more oils and with one or more waxes, and the mixture is then further mixed at a temperature above the congealing point of the wax or of the waxes.

7. Process for producing agents according to Claim 6, **characterized in that** the agent formed is cooled down to ambient temperature and then sieved to a particle size range such that at least 50 wt% of the agent has a particle size of 1 mm or more.

8. Process for producing agents according to Claim 6 or 7, **characterized in that** steps a) or a') are carried out at a temperature below the congealing points of the waxes.

9. Process for producing agents according to one or more of Claims 6 to 8, **characterized in that** the mixture is heated to a temperature in the range from 60°C to 150°C before steps b) or b').

10. Process for producing agents according to one or more of Claims 6 to 9, **characterized in that** steps c) or c') are carried out at 110 to 230°C.

11. Process for producing agents according to one or more of Claims 6 to 10, **characterized in that** the temperature of this mixture is raised to a temperature in the range from 110°C to 230°C after simultaneous addition of oil or oils, wax or waxes to the inorganic pigment.

12. Use of agents according to one or more of Claims 1 to 5 for coloration of building products, preferably asphalt, bitumen, bituminous mixtures, tar and tar-containing compositions.

13. Process for coloration of building products, preferably asphalt, bitumen, bituminous mixtures, tar and tar-containing compositions comprising mixing the agent according to one or more of Claims 1 to 5 with the building product above the softening point thereof.

**14.** Building products **characterized in that** they are colored with agents according to one or more of Claims 1 to 5.

## Revendications

**1.** Composition contenant au moins un pigment inorganique choisi dans le groupe des oxydes de fer, oxydes-hydroxydes de fer, oxydes de chrome, dioxydes de titane et/ou pigments en phase mixte à base d'oxydes métalliques, une ou plusieurs huiles et une ou plusieurs cires, dans laquelle au moins 50 % en poids de la composition présentent une taille de grain de 1 mm ou plus, caractérisée en ce la quantité totale de cire ou cires vaut de plus de 10 à 25 % en poids, par rapport à la quantité totale de la composition, et la quantité totale d'huile ou d'huiles vaut de 0,1 à 5,0 % en poids, par rapport à la quantité totale de la composition et la composition présente un indice d'abrasion de 10 % en poids ou moins.

**2.** Composition selon la revendication 1, **caractérisée en ce que** les huiles sont choisies dans le groupe des huiles synthétiques, qui sont essentiellement constituées des éléments carbone et hydrogène et/ou azote et/ou oxygène et/ou soufre et/ou halogènes et/ou bore, des huiles minérales, des huiles animales et/ou végétales.

**3.** Composition selon la revendication 1 ou 2, **caractérisée en ce que** les cires présentent un point de solidification compris entre 50 et 140 °C.

**4.** Composition selon une ou plusieurs des revendications 1 à 3, **caractérisée en ce que** les cires sont choisies dans le groupe des cires de Fischer-Tropsch, des cires minérales, des cires de lignite, des cires végétales et/ou des cires animales.

**5.** Composition selon une ou plusieurs des revendications 1 à 4, **caractérisée en ce que** la quantité totale de cire ou cires vaut de 13 à 20 % en poids, par rapport à la quantité totale de la composition.

**6.** Procédé pour la préparation de compositions selon une ou plusieurs des revendications 1 à 5, **caractérisé en ce qu'**on mélange soit

a) au moins un pigment inorganique avec une ou plusieurs huiles et
b) on mélange le mélange provenant de l'étape a) avec une ou plusieurs cires,
c) on homogénéise davantage le mélange provenant de l'étape b), à une température supérieure au point de solidification de la cire ou des cires,

soit

a') on mélange au moins un pigment inorganique avec une ou plusieurs cires et
b') on mélange le mélange provenant de l'étape a') avec une ou plusieurs huiles,
c') on homogénéise davantage le mélange provenant de l'étape b'), à une température supérieure au point de solidification de la cire ou des cires,
ou
on mélange au moins un pigment inorganique en même temps avec une ou plusieurs huiles et avec une ou plusieurs cires, et ensuite on homogénéise davantage le mélange à une température supérieure au point de solidification de la cire ou des cires.

**7.** Procédé pour la préparation de compositions selon la revendication 6, **caractérisé en ce que** la composition résultante est refroidie jusqu'à la température ambiante et ensuite on la tamise jusqu'à une plage granulométrique telle qu'au moins 50 % en poids de la composition présente une taille de grain de 1 mm ou plus.

**8.** Procédé pour la préparation de compositions selon la revendication 6 ou 7, **caractérisé en ce qu'**on effectue les étapes a) ou a') à une température inférieure au point de solidification des cires.

**9.** Procédé pour la préparation de compositions selon une ou plusieurs des revendications 6 à 8, **caractérisé en ce qu'**avant les étapes b) ou b') on chauffe le mélange jusqu'à une température de 60 °C à 150 °C.

**10.** Procédé pour la préparation de compositions selon une ou plusieurs des revendications 6 à 9, **caractérisé en ce qu'**on effectue les étapes c) ou c') à une température de 110 à 230 °C.

**11.** Procédé pour la préparation de compositions selon une ou plusieurs des revendications 6 à 10, **caractérisé en ce qu'**après l'addition simultanée d'huile ou d'huiles, de cire ou de cires au pigment inorganique on élève la température de ce mélange jusqu'à une température de 110 °C à 230 °C.

**12.** Utilisation de compositions selon une ou plusieurs des revendications 1 à 5, pour la coloration de matériaux de construction, de préférence d'asphalte, de bitumes, de mélanges bitumineux, de goudron et de compositions contenant du goudron.

**13.** Procédé pour la coloration de matériaux de construction, de préférence d'asphalte, de bitumes, de mélanges bitumineux, de goudron et de compositions contenant du goudron, comprenant le mélange de la composition selon une ou plusieurs des revendications 1 à 5 avec le matériau de construction au-dessus de son point de ramollissement.

**14.** Matériaux de construction, **caractérisés en ce qu'**ils sont colorés avec des compositions selon une ou plusieurs des revendications 1 à 5.

**IN DER BESCHREIBUNG AUFGEFÜHRTE DOKUMENTE**

**In der Beschreibung aufgeführte Patentdokumente**

- US 3778288 A
- EP 0567882 A1
- EP 1598395 A1
- US 6706110 B2
- US 6780234 B2
- EP 0567882 B1

**In der Beschreibung aufgeführte Nicht-Patentliteratur**

- The Shell Bitumen Handbook. 1990, 230-232